# FASCICULE DE BREVET EUROPEEN

(11) **EP 3 514 749 B1**
(45) Date de publication et mention de la délivrance du brevet: **11.09.2024**
(21) Numéro de dépôt: 19153097.1
(22) Date de dépôt: 22.01.2019
(51) Int. Cl.: G06Q 20/34

(54) **PROCEDE DE CONTROLE DE REGLES DE DEPENDANCES D'OBJETS MIS A JOUR DANS UN MICROCIRCUIT, ET DISPOSITIF CORRESPONDANT**
VERFAHREN ZUR KONTROLLE VON ABHANGIGKEITSREGELEN FÜR GEÄNDERTE OBJEKTE IN EINEM MIKROSCHALTKREIS UND ENTSPRECHENDES GERÄT
METHOD FOR CONTROLLING DEPENDANCY RULES OF UPDATED OBJECTS IN A MICROCIRCUIT AND CORRESPONDING DEVICE

(30) Priorité: 23.01.2018 FR 1850525
(43) Date de publication de la demande: 24.07.2019
(73) Titulaire: IDEMIA France, 92400 Courbevoie (FR)
(72) Inventeur: DE OLIVEIRA, Marco, 92700 COLOMBES (FR); ADJAZ, Aghiles, 92700 COLOMBES (FR); CHAMBEROT, Francis, 92700 COLOMBES (FR)
(74) Mandataire: Idemia

(56) Documents cités:
- WO-A1-02/073552
- WO-A1-2006/038106
- FR-A1- 3 051 064

## Description

L'invention se rapporte au domaine général des dispositifs électroniques équipés de microcircuits et aptes à effectuer des opérations telles que des transactions, par exemple en coopérant avec un terminal.

L'invention trouve application de manière non exclusive dans les cartes à puce (ou cartes à microcircuit), conformes par exemple à la norme ISO 7816. L'invention concerne tout particulièrement les cartes à puce selon le standard EMV (« Europay Mastercard Visa », dans sa version 4.3) qui mettent en oeuvre des transactions.

Le standard EMV, bien connu de l'homme du métier, est utilisé pour sécuriser des transactions réalisées par des cartes à puce, en particulier des transactions bancaires de paiement. D'autres transactions peuvent également être mises en oeuvre par ces cartes à puce, par exemple des transactions de transfert, de consultation, ou encore d'authentification.

Ce standard permet de sécuriser les transactions et de limiter les fraudes. A cet effet, il implique l'utilisation de cryptogrammes ou encore de codes secrets (généralement désignés par l'acronyme anglo-saxon :« PIN : Personal Identification Number »).

Cela étant, les cartes à puce peuvent recevoir des commandes comportant des erreurs, voire être attaquées au moyen de commandes, ce qui peut les places dans des états dans lesquels leurs fonctionnalités sont limitées. Dans certains cas, il a été observé que des cartes à puces peuvent être bloquées après avoir reçu de telles commandes comportant des erreurs ou au cours d'attaques.

Le document FR 3 051 064 A1 concerne les cartes à puce ou cartes à microcircuit fonctionnant selon le protocole EMV et leur sécurisation face à des attaques consistant à envoyer une commande, notamment une commande de mise à jour de la configuration de la carte à puce.

Il existe un besoin pour éviter qu'une commande ne limite les fonctionnalités d'un microcircuit, par exemple un microcircuit d'une carte à puce.

L'invention vise notamment à pallier les inconvénients présentés ci-dessus.

### Objet et résumé de l'invention

La présente invention répond à ce besoin en proposant un procédé de contrôle mis en oeuvre par un microcircuit tel que revendiqué.

Il a été observé par les inventeurs de la présente invention que ce sont des commandes de mise à jour qui sont susceptibles de placer un microcircuit dans un état où ses fonctionnalités sont limitées voire dans un état où le microcircuit est bloqué (il ne peut plus être utilisé).

Les microcircuits sont généralement fabriqués par une première entité qui met également en oeuvre les étapes bien connues de l'homme du métier sous le nom de personnalisation et de pré-personnalisation (ces deux étapes font partie d'une phase appelée phase de personnalisation). Une deuxième entité (par exemple une banque dans le cas où le microcircuit est un microcircuit de carte à puce de type carte bancaire). La deuxième entité n'a pas toujours une connaissance de toutes les données inscrites dans le microcircuit au cours des étapes de pré-personnalisation ou de personnalisation. Les inventeurs ont observé que la deuxième entité peut émettre une commande de mise à jour qui est incompatible avec le microcircuit tel qu'il a été configuré lors des étapes de configuration (pré-personnalisation, personnalisation).

En faisant vérifier par le microcircuit directement qu'une règle de mise à jour du premier objet est respectée pour la valeur mise à jour du premier objet, on évite qu'une commande ne place la carte dans un état où elle ne serait que partiellement ou pas du tout fonctionnelle.

Par vérifier une règle de mise à jour, on entend qu'on vérifie qu'une règle est respectée. On dira que la vérification échoue si la règle de mise à jour n'est pas respectée.

Le premier objet peut être une valeur mémorisée dans une mémoire du microcircuit, par exemple une valeur écrite sur un bit ou plusieurs bits pour configurer le microcircuit ou une application du microcircuit. En d'autres termes, le premier objet est une donnée de configuration.

Selon un mode particulier de mise en oeuvre la règle de mise à jour comprend au moins une valeur autorisée pour le premier objet.

Cette valeur autorisée peut être mémorisée préalablement dans une mémoire du microcircuit.

Ainsi, lors de la réception d'une commande, le microcircuit peut vérifier si la nouvelle valeur du premier objet est présente dans une liste de valeurs autorisées pour ce microcircuit. Lorsque l'on vérifie une règle de mise à jour, on vérifie donc que la valeur mise à jour du premier objet est une valeur autorisée.

Selon un mode particulier de mise en oeuvre, le procédé comprend une étape préalable de détermination de ladite au moins une valeur autorisée pour le premier objet à partir d'une règle de dépendance du premier objet à au moins un deuxième objet.

Le premier objet dépend du deuxième objet. Le deuxième objet peut être une valeur mémorisée dans le microcircuit, mais il peut également être une fonction (logicielle ou matérielle) du microcircuit. S'il s'agit d'une fonction, le microcircuit peut vérifier que cette fonction est présente, et s'il s'agit d'une valeur, le microcircuit peut vérifier cette valeur. La règle de dépendance indique donc que, en fonction d'une valeur ou d'un état du deuxième objet dont dépend le premier objet, la nouvelle valeur du premier objet est une valeur autorisée. La valeur autorisée est alors mémorisée pour que, lorsqu'une commande de mise à jour est reçue, on vérifie si la nouvelle valeur du premier objet est bien une valeur autorisée qui a été mémorisée préalablement.

On notera que la détermination de ladite au moins une valeur autorisée comprend la mémorisation de cette au moins une valeur autorisée dans une mémoire du microcircuit.

Selon un mode particulier de mise en oeuvre, l'étape préalable de détermination de ladite au moins une valeur autorisée pour le premier objet est mise en oeuvre au cours d'une phase de personnalisation du microcircuit (c'est-à-dire au cours d'une étape de personnalisation ou au cours d'une étape de pré-personnalisation).

Ainsi, c'est au cours d'une phase de personnalisation du microcircuit que l'on va établir une liste de valeurs autorisées pour un ou plusieurs objets du microcircuit.

Ce mode de mise en oeuvre est particulièrement avantageux car c'est au cours de cette phase de personnalisation que l'on configure le microcircuit, on a donc une connaissance de toute la configuration du microcircuit.

L'invention n'est néanmoins nullement limitée à la mémorisation de ladite au moins une valeur autorisée au cours d'une phase de personnalisation. En fait, selon un mode particulier de mise en oeuvre, le procédé comprend une étape postérieure de détermination d'une valeur autorisée pour au moins un troisième objet à partir d'une règle de dépendance du troisième objet et de la valeur mise à jour pour le premier objet.

Ainsi, après avoir mis en oeuvre l'étape de vérification pour le premier objet et sa nouvelle valeur, on peut vérifier si un autre objet a une nouvelle valeur autorisée, en particulier si celui-ci dépend du premier objet.

En fait, on peut maintenir, par exemple dans le microcircuit, une liste de valeurs autorisées pour tous les objets que l'on peut mettre à jour du microcircuit. Cette liste peut elle-même être mise à jour par le microcircuit au moyen de la connaissance des règles de dépendances.

Selon un mode particulier de mise en oeuvre, ladite au moins une valeur autorisée pour le premier objet est mémorisée dans le microcircuit. Tel peut être également le cas de toutes les valeurs autorisées d'autres objets.

Selon l'invention, la règle de mise à jour comprend une règle de dépendance du premier objet à au moins un deuxième objet.

Ainsi, selon l'invention, on ne vérifie pas directement si la nouvelle valeur correspond à une valeur autorisée, mais on vérifie indirectement si cette nouvelle valeur est autorisée compte tenu d'autres objets. Comme exposé ci-avant, le premier objet dépend du deuxième objet. Le deuxième objet peut être une valeur mémorisée dans le microcircuit, mais il peut également être une fonction (logicielle ou matérielle) du microcircuit. S'il s'agit d'une fonction, le microcircuit peut vérifier que cette fonction est présente, et s'il s'agit d'une valeur, le microcircuit peut vérifier cette valeur. La règle de dépendance indique donc que, en fonction d'une valeur ou d'un état du deuxième objet dont dépend le premier objet, la nouvelle valeur du premier objet est une valeur autorisée. La valeur autorisée est alors mémorisée pour que, lorsqu'une commande de mise à jour est reçue, on vérifie si la nouvelle valeur du premier objet est bien une valeur autorisée qui a été mémorisée préalablement.

Selon l'invention, une règle de dépendance d'un objet à un autre objet indique qu'une nouvelle valeur de l'objet est autorisée si l'autre objet existe, ou si l'autre objet a une valeur prédéterminée.

Selon un mode particulier de mise en oeuvre, on mémorise la ou les règles de dépendances dans le microcircuit.

En particulier, on pourra enregistrer ces règles de dépendance dans une mémoire non-volatile telle qu'une EEPROM (« Electrically-Erasable Programmable Read-Only Memory » en langue anglaise) ou encore une autre mémoire non volatile du microcircuit.

Selon un mode particulier de mise en oeuvre, la mémorisation de la ou des règles de dépendances dans le microcircuit est mise en oeuvre au cours d'une phase de personnalisation du microcircuit.

Ce mode de mise en oeuvre est particulièrement avantageux car c'est au cours de cette phase de personnalisation que l'on configure le microcircuit, on a donc une connaissance de toute la configuration du microcircuit.

L'invention n'est cependant nullement limitée à la mémorisation des règles de dépendance au cours d'une phase de personnalisation, cette mémorisation peut être mise en oeuvre à tout moment, par exemple au cours d'une transaction postérieure à la phase de personnalisation.

Selon un mode particulier de mise en oeuvre, on met en oeuvre un traitement d'erreur si la vérification de la règle de mise à jour échoue.

Il a été observé par les inventeurs que certaines commandes de mise à jour peuvent rendre un microcircuit inutilisable sans qu'il ne soit plus possible de le rétablir dans un état utilisable. Tel est notamment le cas des commandes de mise à jour qui activent une écriture dans une zone de mémoire qui n'a pas été prévue initialement dans le microcircuit. Si une telle commande est reçue par le microcircuit, le traitement d'erreur à mettre en oeuvre peut comporter un refus de la mise à jour.

Il également été observé par les inventeurs que des commandes de mise à jour peuvent rendre inutilisable le microcircuit pour la mise en oeuvre de certaines fonctions, sans que cet état ne soit permanent et qu'il soit possible de rétablir le microcircuit dans un état utilisable. Tel est notamment le cas des commandes de mise à jour qui activent une première fonction dont l'exécution dépend de l'existence d'une deuxième fonction (la valeur de configuration qui active la première fonction est un premier objet du microcircuit, l'existence de la deuxième fonction est le deuxième objet par exemple incarnée par une valeur mémorisée dans le microcircuit, et il existe une règle de dépendance entre ce premier objet et le deuxième objet). Dans ce cas, le traitement d'erreur peut autoriser la commande de mise à jour mais mettre en oeuvre une communication ultérieure pour signaler qu'une mise à jour potentiellement problématique a été mise en oeuvre.

Alternativement, le traitement d'erreur peut comporter un changement de la valeur mise à jour du premier objet (par exemple pour utiliser une valeur autorisée déjà mémorisée dans le microcircuit ou une valeur autorisée déterminée à partir d'une règle de dépendance).

Selon un mode particulier de mise en oeuvre, le microcircuit est configuré pour mettre en oeuvre des transactions selon le standard EMV et la commande de mise à jour du premier objet est une commande de script selon le standard EMV reçue au cours d'une transaction mise en oeuvre par le microcircuit.

Le standard EMV « EMV Integrated Circuit Card Spécifications for Payment Systems » dans sa version 4.3 de novembre 2011 ou dans une version ultérieure, désigne les commandes de script par l'expression anglo-saxonne « issuer script ». Certaines cartes EMV contiennent une application appelée CPA définie dans le standard « EMV Integrated Circuit Card Spécifications for Payment Systems - Common Payment Application » dans sa version 1.0 de décembre 2005 ou dans une version ultérieure, ce standard désigne également les commandes de script par l'expression anglo-saxonne « issuer script ». L'invention vise également les commandes de script visant les applications CPA pour les microcircuits contenant l'application CPA. En outre, elle peut concerner des commandes de mise à jour destinées à différentes applications contenues dans les microcircuits.

Ces commandes de script sont généralement émises par les entités qui délivrent les microcircuits aux utilisateurs, qui peuvent ne pas être les entités qui mettent en oeuvre les étapes de pré-personnalisation ou de personnalisation d'un microcircuit.

Par exemple, si le microcircuit est un microcircuit de carte à puce utilisé pour mettre en oeuvre des transactions bancaires, les banques peuvent émettre des commandes de script au cours de transactions sans avoir une connaissance complète de la configuration du microcircuit de la carte à puce. Un envoi d'une commande de script par une banque peut donc bloquer le microcircuit.

Aussi, à des fins frauduleuses, il est possible qu'une entité qui souhaite bloquer des cartes à puces émette volontairement de telles commandes lorsqu'elle a accès à la carte à puce.

L'invention propose également un dispositif électronique comprenant un microcircuit tel que revendiqué.

Ce dispositif et le microcircuit peuvent être configurés pour la mise en oeuvre de chacune des étapes du procédé tel que défini ci-avant.

L'invention propose également une carte à microcircuit comportant le dispositif tel que défini ci-avant.

L'invention propose également un programme d'ordinateur comportant des instructions pour l'exécution des étapes d'un procédé tel que défini ci-avant lorsque ledit programme est exécuté par un ordinateur. A noter que les programme d'ordinateur mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention propose également un support d'enregistrement lisible par un ordinateur sur lequel est enregistré un programme d'ordinateur comprenant des instructions pour l'exécution des étapes d'un procédé tel que défini ci-avant.

Les supports d'enregistrement (ou d'information) mentionnés dans le présent exposé peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple dépourvu de tout caractère limitatif.

Sur les figures :
- la figure 1 représente de façon schématique différentes étapes d'un exemple de procédé selon l'invention,
- la figure 2 représente de façon schématique différentes étapes d'un autre exemple de procédé selon l'invention, et
- la figure 3 représente de façon schématique un exemple de carte à microcircuit selon l'invention.

### Description détaillée d'un mode de réalisation

Nous allons maintenant décrire un procédé de contrôle mis en oeuvre par un microcircuit.

Plus précisément, dans ce qui suit, on va décrire à la fois les phases de configuration de ce microcircuit et la mise en oeuvre du procédé à proprement parler.

Aussi, dans les exemples décrits ci-après, le microcircuit est un microcircuit d'une carte à microcircuit (ou carte à puce) selon le standard EMV (« EMV Integrated Circuit Card Spécifications for Payment Systems » dans sa version 4.3 de novembre 2011) apte à mettre en oeuvre des transactions de paiement. En particulier, cette carte à microcircuit est munie d'une application CPA définie dans le standard « EMV Integrated Circuit Card Spécifications for Payment Systems - Common Payment Application ». L'invention n'est néanmoins ni limitée aux microcircuits de cartes à microcircuits ni aux transactions de paiement.

En particulier, le microcircuit peut être intégré dans un autre type de dispositif électronique, et il peut être utilisé pour des applications d'authentification ou de contrôle d'accès.

Dans le standard CPA « EMV Integrated Circuit Card Spécifications for Payment Systems - Common Payment Application », il est prévu de mettre en oeuvre une configuration en changeant les valeurs de bits mémorisés dans une mémoire non-volatile du microcircuit.

Par exemple, dans le tableau qui suit, on a indiqué les valeurs possibles pour les bits d'un octet ayant pour référence « C1 » (on pourra également parler d'un « tag » en langue anglaise) pour configuration de cette application. Cet octet peut avoir ses huit bits configurés comme présenté dans le tableau suivant où « bi » indique le i-ième bit de l'octet C1 :

| b8 | b7 | b6 | b5 | b4 | b3 | b2 | b1 |
|---|---|---|---|---|---|---|---|
| 1 | | | | | | | |
| | 1 | | | | | | |
| | | 1 | | | | | |
| | | | 1 | | | | |
| | | | | X | | | |
| | | | | 0 | | | |
| | | | | 1 | | | |
| | | | | | 1 | | |
| | | | | | | 1 | |
| | | | | | | | 1 |

Dans cet exemple, le deuxième bit b2, lorsqu'il est à 1, indique que la vérification du code PIN (« Personal Identification Number ») en clair (« plaintext » en anglais) est supportée en mode hors-ligne.

Le troisième bit b3, lorsqu'il est à 1, indique que la vérification du code PIN chiffré est supportée en mode hors-ligne.

Dans les exemples décrits ci-après, le premier objet à mettre à jour peut être soit le deuxième bit b2 soit le deuxième bit b3.

Il a été observé par les inventeurs que pour que le deuxième bit b2 puisse être à « 1 » sans que cela n'affecte le fonctionnement du microcircuit, il est nécessaire que le code PIN existe dans la mémoire du microcircuit et qu'il ait été personnalisé. Il existe donc une règle de dépendance qui lie ce deuxième bit à l'existence d'un PIN personnalisé.

Il a également été observé par les inventeurs que pour que le troisième bit b3 puisse être à « 1 » sans que cela n'affecte le fonctionnement du microcircuit, il est nécessaire que :
- Le code PIN existe dans la mémoire du microcircuit et qu'il ait été personnalisé ;
- Un module matériel de chiffrement existe (ce module de chiffrement peut être un crypto-processeur supportant l'exponentiation modulaire utilisée par le chiffrement RSA) ;
- L'application de paiement (appellée CPA) soit capable d'utiliser le chiffrement RSA ; et
- La clé de chiffrement RSA (appelée PIN RSA) a été personnalisée.

On peut noter que l'homme du métier saura faire mettre en oeuvre par le microcircuit les vérifications associées à ces conditions.

Aussi, on peut noter que ces règles de dépendances peuvent être écrites en langage informatique dans la mémoire du microcircuit. Par exemple, en visant chaque objet que l'on peut mettre à jour avec un format « BER-TLV : Basic Encoding Rule », et chaque dépendance ou condition susvisée peut être cataloguée au moyen d'une étiquette, par exemple appelée « tag » en langue anglaise.

Dans l'exemple du troisième bit b3, on a pour ce bit une table avec quatre dépendances à vérifier pour une valeur mise à jour égale à 1.

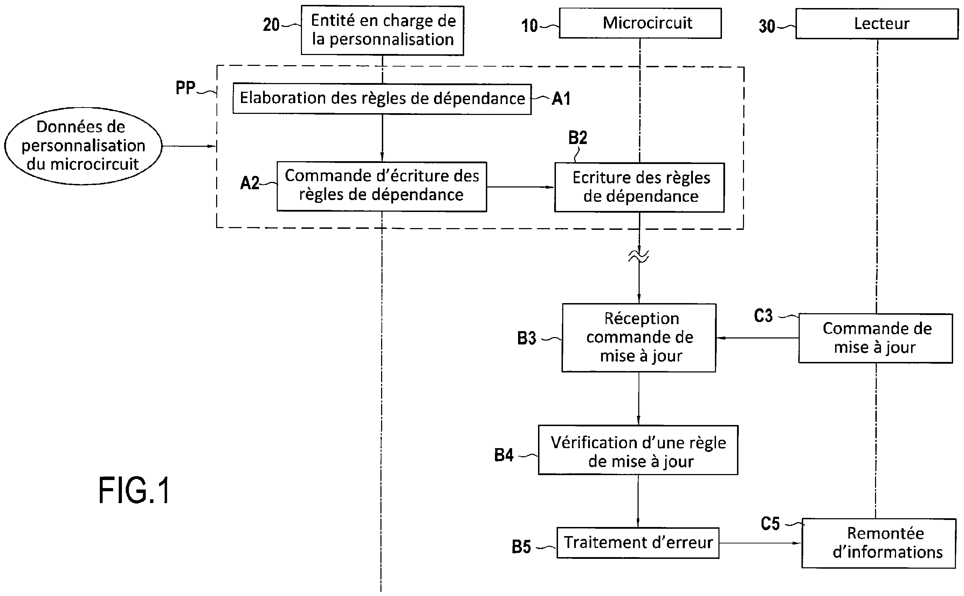

Ces tables de dépendance, par exemple pour chaque objet d'un microcircuit qui peut être modifié au moyen d'une commande de script CPA, sont élaborées au cours d'une phase préliminaire appelée personnalisation et représentée sur la figure 1.

Sur cette figure, on a représenté différentes étapes mises en oeuvre par un microcircuit 10, par une entité en charge de la personnalisation 20, et par un lecteur 30.

La phase de personnalisation est référencée PP sur la figure, et elle est mise en oeuvre par l'entité 20 sur le microcircuit 10.

A titre indicatif, on peut noter qu'il existe une phase appelée personnalisation qui comprend une étape pré-personnalisation et une personnalisation (dans la présente demande, il y a une distinction entre les vocables phase et étape ; la phase comprend des étapes). La pré-personnalisation correspond à une étape de configuration du microcircuit et/ou du système d'exploitation, cette étape étant mise en oeuvre pour un groupe de microcircuits, par exemple un groupe de microcircuits qui vont tous être délivrés aux utilisateurs par une même banque. La pré-personnalisation peut par exemple correspondre à l'activation et à la désactivation de moyens de communication (contact et/ou sans contact), de protocoles de communications, ou encore d'algorithmes cryptographiques.

L'étape de personnalisation comprend l'écriture d'informations différentes pour chaque microcircuit. Cela peut correspondre au chargement de clés et de certificats cryptographiques, ou encore de données liées à l'utilisateur qui sera le porteur du microcircuit telles que son nom, son adresse, ou des données biométriques.

La phase de personnalisation est réalisée sur la base de données de personnalisation du microcircuit qui sont représentées sur la figure.

Dans une première étape A1, l'entité 20 élabore des règles de dépendance (et notamment celles présentées ci-avant), par exemple en recevant des instructions d'un opérateur ayant connaissance des données de personnalisation du microcircuit.

Dans une étape A2, l'entité 20 commande l'écriture des règles de dépendance élaborées à l'étape A1 dans le microcircuit. Le microcircuit reçoit la commande correspondante et écrit ces règles dans sa mémoire (étape B2), par exemple au sein d'une mémoire EEPROM.

Ultérieurement, le microcircuit 10 a été remis à un utilisateur par une entité émettrice telle qu'une banque. Au cours d'une transaction, le microcircuit 10 communique avec un lecteur 10. Le lecteur 10 émet au cours d'une étape C3 une commande de mise à jour, ou commande de script, qui vise par exemple à mettre à 1 les bits b2 et b3 visés ci-avant.

Cette commande est reçue par le microcircuit à l'étape B3.

Ultérieurement, une étape B4 est mise en oeuvre dans laquelle on vérifie les règles de mise à jour, qui sont ici des règles de dépendance associées aux nouvelles valeurs conférées par exemple aux bits b2 et b3.

Si l'une des vérifications des règles de dépendance échoue, le microcircuit 10 met en oeuvre un traitement d'erreur B5. Ce traitement d'erreur peut comporter un refus de la mise à jour, une autorisation de la mise à jour combinée avec une autre action telle qu'une remontée d'information (représentée par l'étape C5 sur la figure), ou encore un changement de la valeur pour une autre valeur.

La remontée d'information de l'étape C5 peut être mise en oeuvre ultérieurement, par exemple au cours d'une transaction ultérieure dans un mode en ligne. Elle peut également être faite vers l'entité émettrice du microcircuit qui peut être une banque.

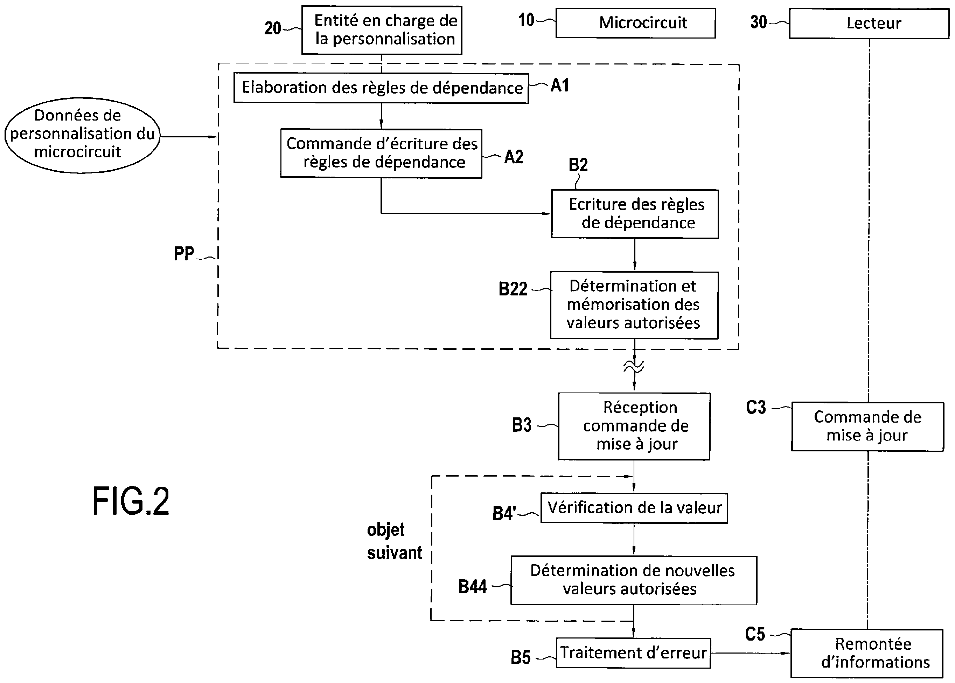

Sur la figure 2, les éléments portants les mêmes références sur les figures 1 et 2 sont analogues. Cette figure présente une variante du procédé illustré à la figure 1 dans lequel le microcircuit 10 met en oeuvre une étape B22 après l'étape B2 dans laquelle on détermine des valeurs autorisées.

Au cours de l'étape B22, on va déterminer par exemple si « 1 » et « 1 » sont respectivement des valeurs autorisées pour les bits b2 et b3 visés ci-avant compte tenu de la configuration du microcircuit après la mise en oeuvre des étapes précédentes de la phase de personnalisation. Cela peut notamment être mis en oeuvre comme lors de l'étape B4 décrite en référence à la figure 1.

Ces valeurs autorisées sont mémorisées dans le microcircuit au cours de l'étape B22.

Après la réception d'une commande de mise à jour dans l'étape B3, le microcircuit met en oeuvre l'étape B4' dans laquelle on vérifie directement si les valeurs mises à jour ont été préalablement enregistrées comme étant des valeurs autorisées. Dans cette variante, on ne vérifie pas que les règles de dépendances sont respectées car on a déjà déterminé, pour ce microcircuit, quelles sont les valeurs autorisées.

On peut mettre en oeuvre une étape B44 ensuite au cours de laquelle on va déterminer de nouvelles valeurs autorisées compte tenu de la mise à jour qui va être faite ou qui a été faite (les deux cas sont possibles, selon que la vérification a une issue positive ou non).

En fait, une fois qu'une valeur a été mise à jour, si elle est associée à un objet qui apparaît dans une règle de dépendance d'un autre objet, alors la valeur autorisée de cet autre objet peut être changée. Au cours de l'étape B44, on va déterminer la ou les nouvelles valeurs autorisées, et les mémorisées dans une mémoire du microcircuit 10.

On peut noter que si la commande des étapes B3 et C3 vise à modifier la valeur de plusieurs objets, alors il est possible de mettre en oeuvre les vérifications de valeurs de manière séquentielle, éventuellement en modifiant la valeur d'un objet après que la vérification correspondante ait réussi.

Ainsi, dans l'exemple présentés ci-dessus, on va modifier la valeur du bit b2 après avoir vérifié sa valeur dans l'étape B4'. Ce bit b2 n'apparait pas dans les règles de dépendances du bit b3 à la valeur « 1 ». On ne modifie pas les valeurs autorisées pour le bit b3, et on va ensuite mettre en oeuvre une deuxième fois l'étape B4' mais cette fois ci pour le bit b3.

Ce traitement séquentiel des objets peut également être implémenté pour le mode de mise en oeuvre décrit en référence à la figure 1.

Alternativement, on peut choisir un autre ordre pour traiter les commandes de mise à jour. Par exemple, on peut tout d'abord traiter les commandes qui modifient des objets mémorisés dans la mémoire appelée EEPROM.

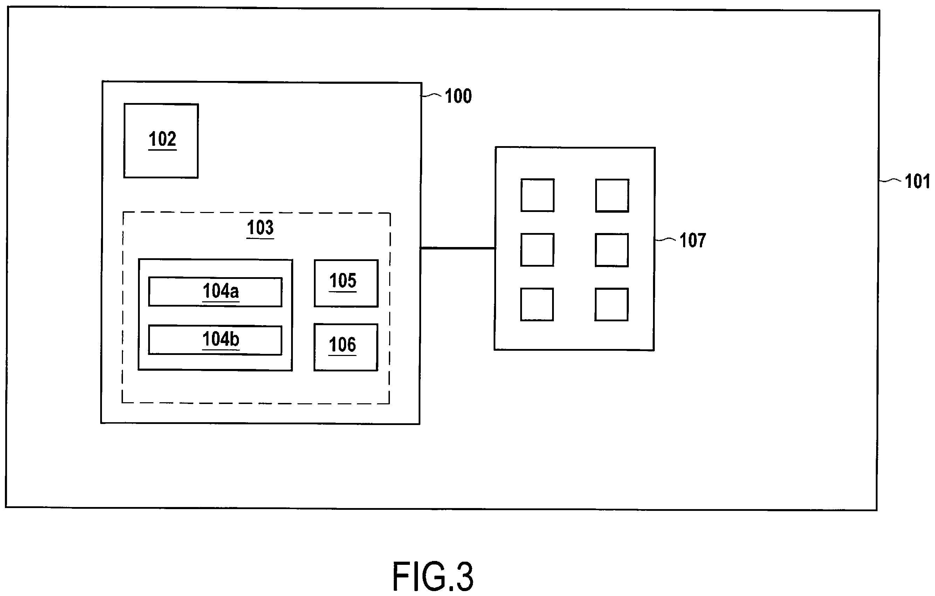

Sur la figure 3, on a représenté un microcircuit 100 selon un mode de réalisation de l'invention. Ce microcircuit peut mettre en oeuvre les procédés décrits en référence aux figures 1 et 2.

Le microcircuit 100 est agencé au sein d'une carte à microcircuit 101. La carte à microcircuit 101 est une carte à microcircuit conforme à la norme ISO 7816 utilisant le standard CPA pour effectuer des transactions. La carte à microcircuit est, dans cet exemple, une carte bancaire qui peut effectuer des transactions de paiement.

Le microcircuit 100 comporte un processeur 102 et une mémoire non-volatile 103. Dans la mémoire non-volatile 103, des instructions de programme d'ordinateur 104 sont mémorisées.

Plus précisément, les instructions de programme d'ordinateur 104 comportent :
- une instruction 104a de réception d'une commande de mise à jour d'un premier objet 105 mémorisé dans le microcircuit indiquant une valeur mise à jour pour le premier objet,
- une instruction 104b de vérification d'une règle de mise à jour 106 dudit premier objet tenant compte de ladite valeur mise à jour pour le premier objet.

Les instructions 104a et 104b forment avec le processeur 102 des modules du microcircuits configurés pour réaliser respectivement les étapes de réception d'une commande de mise à jour d'un premier objet mémorisé dans le microcircuit indiquant une valeur mise à jour pour le premier objet et de vérification d'une règle de mise à jour dudit premier objet tenant compte de ladite valeur mise à jour pour le premier objet

La carte à microcircuit 101 comporte également un module de communication tel que des contacts 107 pour réaliser des transactions en communiquant avec un lecteur.

## Revendications

1. Procédé de contrôle mis en oeuvre par un microcircuit comprenant :
- une réception (B3) d'une commande de mise à jour d'un premier objet (105) mémorisé dans le microcircuit indiquant une valeur mise à jour pour le premier objet, le premier objet étant une donnée de configuration du microcircuit,
- une vérification (B4, B4') d'une règle de mise à jour (106) dudit premier objet tenant compte de ladite valeur mise à jour pour le premier objet, **caractérisé en ce que** la règle de mise à jour comprend une règle de dépendance du premier objet à au moins un deuxième objet qui indique que la valeur mise à jour pour le premier objet est autorisée si le deuxième objet existe, ou si le deuxième objet a une valeur prédéterminée, le deuxième objet étant une valeur mémorisée dans le microcircuit, ou une fonction du microcircuit, et étant nécessaire pour que la mise à jour du premier objet n'affecte pas le fonctionnement du microcircuit.

2. Procédé selon la revendication 1, dans lequel la règle de mise à jour comprend au moins une valeur autorisée pour le premier objet.

3. Procédé selon la revendication 1 ou 2, comprenant une étape préalable de détermination (B22) de ladite au moins une valeur autorisée pour le premier objet à partir d'une règle de dépendance du premier objet à au moins un deuxième objet.

4. Procédé selon la revendication 3, dans lequel l'étape préalable de détermination (B22) de ladite au moins une valeur autorisée pour le premier objet est mise en oeuvre au cours d'une phase de personnalisation (PP) du microcircuit.

5. Procédé selon l'une quelconque des revendications 2 à 4, comprenant une étape postérieure de détermination (B44) d'une valeur autorisée pour au moins un troisième objet à partir d'une règle de dépendance du troisième objet et de la valeur mise à jour pour le premier objet.

6. Procédé selon l'une quelconque des revendications 2 à 5, dans lequel ladite au moins une valeur autorisée pour le premier objet est mémorisée dans le microcircuit.

7. Procédé selon l'une des revendications 1 ou 3 à 6, dans lequel on mémorise la ou les règles de dépendances dans le microcircuit.

8. Procédé selon la revendication 7, dans lequel la mémorisation de la ou des règles de dépendances dans le microcircuit est mise en oeuvre au cours d'une phase de personnalisation (PP) du microcircuit.

9. Procédé selon l'une quelconque des revendications 1 à 8, dans lequel on met en oeuvre un traitement d'erreur (B5) si la vérification de la règle de mise à jour échoue.

10. Procédé selon l'une quelconque des revendications 1 à 9, dans lequel le microcircuit est configuré pour mettre en oeuvre des transactions selon le standard EMV et la commande de mise à jour du premier objet est une commande de script selon le standard EMV reçue au cours d'une transaction mise en oeuvre par le microcircuit.

11. Dispositif électronique comprenant un microcircuit, le microcircuit comprenant :
- un module de réception (102, 104a) d'une commande de mise à jour d'un premier objet mémorisé dans le microcircuit indiquant une valeur mise à jour pour le premier objet, le premier objet étant une donnée de configuration du microcircuit,
- un module de vérification (102, 104b) d'une règle de mise à jour dudit premier objet tenant compte de ladite valeur mise à jour pour le premier objet,
**caractérisé en ce que** la règle de mise à jour comprend une règle de dépendance du premier objet à au moins un deuxième objet qui indique que la valeur mise à jour pour le premier objet est autorisée si le deuxième objet existe, ou si le deuxième objet a une valeur prédéterminée, le deuxième objet étant une valeur mémorisée dans le microcircuit, ou une fonction du microcircuit, et étant nécessaire pour que la mise à jour du premier objet n'affecte pas le fonctionnement du microcircuit.

12. Carte à microcircuit (101) comportant un dispositif selon la revendication 11.

13. Programme d'ordinateur comportant des instructions (104, 104a, 104b) pour l'exécution des étapes d'un procédé de contrôle selon l'une quelconque des revendications 1 à 10 lorsque ledit programme est exécuté par un ordinateur.

## Patentansprüche

1. Verfahren zur Kontrolle, welches von einer Mikroschaltung durchgeführt wird, umfassend:
- einen Empfang (B3) eines Befehls zur Aktualisierung eines in der Mikroschaltung gespeicherten ersten Objekts (105), der einen aktualisierten Wert für das erste Objekt angibt, wobei das erste Objekt ein Konfigurationsdatenelement der Mikroschaltung ist,
- eine Überprüfung (B4, B4') einer Aktualisierungsregel (106) des ersten Objekts unter Berücksichtigung des aktualisierten Wertes für das erste Objekt, **dadurch gekennzeichnet, dass** die Aktualisierungsregel eine Regel der Abhängigkeit des ersten Objekts von mindestens einem zweiten Objekt umfasst, welche angibt, dass der aktualisierte Wert für das erste Objekt zulässig ist, falls das zweite Objekt existiert oder falls das zweite Objekt einen vorbestimmten Wert hat, wobei das zweite Objekt ein in der Mikroschaltung gespeicherter Wert oder eine Funktion der Mikroschaltung ist und notwendig ist, damit die Aktualisierung des ersten Objekts die Funktionsfähigkeit der Mikroschaltung nicht beeinträchtigt.

2. Verfahren nach Anspruch 1, wobei die Aktualisierungsregel mindestens einen zulässigen Wert für das erste Objekt umfasst.

3. Verfahren nach Anspruch 1 oder 2, welches einen vorausgehenden Schritt der Bestimmung (B22) des mindestens einen zulässigen Wertes für das erste Objekt anhand einer Regel der Abhängigkeit des ersten Objekts von mindestens einem zweiten Objekt umfasst.

4. Verfahren nach Anspruch 3, wobei der vorausgehende Schritt der Bestimmung (B22) des mindestens einen zulässigen Wertes für das erste Objekt während einer Personalisierungsphase (PP) der Mikroschaltung durchgeführt wird.

5. Verfahren nach einem der Ansprüche 2 bis 4, welches einen nachfolgenden Schritt der Bestimmung (B44) eines zulässigen Wertes für mindestens ein drittes Objekt anhand einer Regel der Abhängigkeit des dritten Objekts und des aktualisierten Wertes für das erste Objekt umfasst.

6. Verfahren nach einem der Ansprüche 2 bis 5, wobei der mindestens eine zulässige Wert für das erste Objekt in der Mikroschaltung gespeichert ist.

7. Verfahren nach einem der Ansprüche 1 oder 3 bis 6, wobei die Abhängigkeitsregel(n) in der Mikroschaltung gespeichert wird (werden).

8. Verfahren nach Anspruch 7, wobei die Speicherung der Abhängigkeitsregel(n) in der Mikroschaltung während einer Personalisierungsphase (PP) der Mikroschaltung durchgeführt wird.

9. Verfahren nach einem der Ansprüche 1 bis 8, wobei eine Fehlerbehandlung (B5) durchgeführt wird, falls die Überprüfung der Aktualisierungsregel fehlschlägt.

10. Verfahren nach einem der Ansprüche 1 bis 9, wobei die Mikroschaltung dafür ausgelegt ist, Transaktionen gemäß der EMV-Norm durchzuführen, und der Befehl zur Aktualisierung des ersten Objekts ein Skriptbefehl gemäß der EMV-Norm ist, der während einer von der Mikroschaltung durchgeführten Transaktion empfangen wird.

11. Elektronische Vorrichtung, welche eine Mikroschaltung umfasst, wobei die Mikroschaltung umfasst:
- ein Modul zum Empfang (102, 104a) eines Befehls zur Aktualisierung eines in der Mikroschaltung gespeicherten ersten Objekts, der einen aktualisierten Wert für das erste Objekt angibt, wobei das erste Objekt ein Konfigurationsdatenelement der Mikroschaltung ist,
- ein Modul zur Überprüfung (102, 104b) einer Aktualisierungsregel des ersten Objekts unter Berücksichtigung des aktualisierten Wertes für das erste Objekt,
**dadurch gekennzeichnet, dass** die Aktualisierungsregel eine Regel der Abhängigkeit des ersten Objekts von mindestens einem zweiten Objekt umfasst, welche angibt, dass der aktualisierte Wert für das erste Objekt zulässig ist, falls das zweite Objekt existiert oder falls das zweite Objekt einen vorbestimmten Wert hat, wobei das zweite Objekt ein in der Mikroschaltung gespeicherter Wert oder eine Funktion der Mikroschaltung ist und notwendig ist, damit die Aktualisierung des ersten Objekts die Funktionsfähigkeit der Mikroschaltung nicht beeinträchtigt.

12. Mikroschaltungskarte (101), welche eine Vorrichtung nach Anspruch 11 aufweist.

13. Computerprogramm, welches Anweisungen (104, 104a, 104b) zur Ausführung der Schritte eines Verfahrens zur Kontrolle nach einem der Ansprüche 1 bis 10, wenn das Programm von einem Computer ausgeführt wird, umfasst.

## Claims

1. Control method implemented by a microcircuit, comprising:
- receiving (B3) a command to update a first object (105) stored in the microcircuit indicating an updated value for the first object, the first object being a microcircuit configuration datum,
- verifying (B4, B4') an update rule (106) for said first object taking into account said updated value for the first object, **characterized in that** the update rule comprises a dependency rule for the first object in relation to at least one second object that indicates that the updated value for the first object is authorized if the second object exists, or if the second object has a predetermined value, the second object being a value stored in the microcircuit, or a function of the microcircuit, and being necessary so that the update of the first object does not affect the operation of the microcircuit.

2. Method according to Claim 1, wherein the update rule comprises at least one authorized value for the first object.

3. Method according to Claim 1 or 2, comprising a preliminary step of determining (B22) said at least one authorized value for the first object based on a dependency rule for the first object in relation to at least one second object.

4. Method according to Claim 3, wherein the preliminary step of determining (B22) said at least one authorized value for the first object is implemented in the course of a microcircuit personalization phase (PP).

5. Method according to any one of Claims 2 to 4, comprising a subsequent step of determining (B44) an authorized value for at least one third object based on a dependency rule for the third object and the updated value for the first object.

6. Method according to any one of Claims 2 to 5, wherein said at least one authorized value for the first object is stored in the microcircuit.

7. Method according to any one of Claims 1 or 3 to 6, wherein the one or more dependency rules are stored in the microcircuit.

8. Method according to Claim 7, wherein the one or more dependency rules are stored in the microcircuit in the course of a microcircuit personalization phase (PP).

9. Method according to any one of Claims 1 to 8, wherein error handling (B5) is implemented if the verification of the update rule fails.

10. Method according to any one of Claims 1 to 9, wherein the microcircuit is configured to implement transactions in accordance with the EMV standard and the command to update the first object is a script command in accordance with the EMV standard and received in the course of a transaction implemented by the microcircuit.

11. Electronic device comprising a microcircuit, the microcircuit comprising:
- a reception module (102, 104a) for receiving a command to update a first object stored in the microcircuit indicating an updated value for the first object, the first object being a microcircuit configuration datum,
- a verification module (102, 104b) for verifying an update rule for said first object taking into account said updated value for the first object,
**characterized in that** the update rule comprises a dependency rule for the first object in relation to at least one second object that indicates that the updated value for the first object is authorized if the second object exists, or if the second object has a predetermined value, the second object being a value stored in the microcircuit, or a function of the microcircuit, and being necessary so that the update of the first object does not affect the operation of the microcircuit.

12. Microcircuit card (101) comprising a device according to Claim 11.

13. Computer program comprising instructions (104, 104a, 104b) for carrying out the steps of a control method according to any one of Claims 1 to 10 when said program is executed by a computer.
